(19) Europäisches Patentamt
European Patent Office
Office européen des brevets

(11) **EP 2 571 940 B1**

(12) **EUROPEAN PATENT SPECIFICATION**

(45) Date of publication and mention
of the grant of the patent:
**09.11.2016 Bulletin 2016/45**

(21) Application number: **11701675.8**

(22) Date of filing: **01.02.2011**

(51) Int Cl.:
***C08L 95/00*** *(2006.01)*      ***E01C 7/26*** *(2006.01)*

(86) International application number:
**PCT/EP2011/051411**

(87) International publication number:
**WO 2011/144364 (24.11.2011 Gazette 2011/47)**

(54) **BITUMINOUS EMULSION AND COMPOSITE MATERIAL FOR ROAD CONTAINING IT**

BITUMINÖSE EMULSION UND VERBUNDSTOFF FÜR STRASSEN DAMIT

ÉMULSION BITUMINEUSE ET MATÉRIAU COMPOSITE POUR ROUTE CONTENANT CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2010 EP 10382127**

(43) Date of publication of application:
**27.03.2013 Bulletin 2013/13**

(73) Proprietor: **Sorigué, S.A.
25006 Lleida (ES)**

(72) Inventor: **QUEROL SOLÀ, Núria
E-25230 Mollerussa (ES)**

(74) Representative: **Oficina Ponti, SLP
C. de Consell de Cent 322
08007 Barcelona (ES)**

(56) References cited:
**WO-A1-94/23129        WO-A1-99/06139
WO-A1-99/51676        WO-A1-99/51708
WO-A1-99/58491        WO-A1-2007/034081
WO-A1-2009/103445    WO-A2-01/64779
WO-A2-2007/112335    WO-A2-2008/130789
US-B2- 6 540 822**

Remarks:
The file contains technical information submitted after
the application was filed and not included in this
specification

**Description**

FIELD OF THE INVENTION

The present invention relates to a bituminous emulsion and to a composite material for road containing it. The invention also relates to a process for obtaining it, and its use in paving roads and similar.

BACKGROUND OF THE INVENTION

Various types of materials for road are known, especially those for paving roads, tracks, streets, etc., that mainly comprise aggregates, including mineral powder and a hydrocarbon binder. Optionally, they may also comprise additives.

The process of manufacturing these composite materials for road comprises the basic stages of heating the hydrocarbon binder with the aggregates and mineral powder.

Aggregates have been extensively used for the production of concrete and mortar, fillers, edging, railway ballast, road base and sub-base and asphaltic agglomerate surfaces and can be of natural, artificial or recycled origins. Natural aggregates are classified by their origin from sedimentary calcareous rocks such as limestone and dolomite, sand and gravel, and igneous and metamorphic rocks such as granite, basalt and quartzite. Artificial aggregates are obtained from industrial processes and have been subjected to some physical-chemical treatments or other modifications. Finally, recycled aggregates are residues from demolition or construction and rubble.

Among the materials used in urban, industrial or road paving are those produced from asphaltic or bituminous mixtures.

A bituminous mixture is a mixture of highly viscous organic liquids which are black, sticky, fully soluble in carbon disulphide and mainly composed of polycyclic aromatic hydrocarbons acting as a binder. In general, a bituminous mixture is a combination of bitumen, a viscous material, sticky and black in colour, and aggregates including mineral powder in specific proportions. The relative proportions of these aggregates determine the physical properties of the mixture and, eventually, its performance as a final mixture for a specific use. These bituminous mixtures can be manufactured in plants with suitable equipment. Depending on the properties and thicknesses of the layer, they may bring structural capacities to the road.

WO99/06139 discloses several processes for preparing an emulsion which includes both an emulsion of the type "*eau dans huile*" (W/O) and of the type of "*huile dans eau*" (O/W). Example 1 of said document discloses the preparation of an aqueous emulsion of bitumen of type a water in oil emulsion (W/O).

Particularly, WO94/23129A1 discloses a process for preparing a bitumen emulsion, oil/water (O/W), using at least an static mixer that works at a turbulent regime, which requires high energy and high pressure to suitable work, for example, shear of 35,000 s$^{-1}$ and pressure of 2400 kPa at the static mixer.

It is well known that the majority of bitumens contain sulphur and various heavy metals such as nickel, vanadium, lead, chromium, mercury and also arsenic, selenium and other toxic elements. Bitumen is an adherent and cohesive highly impermeable material, capable of withstanding high instantaneous forces and of flowing under the action of continuous loads. It has the proper properties for the construction of road, basically fulfilling the functions of making the structure of the road impermeable, making it insensitive to humidity and effective against rain water. It also provides an intimate union and cohesion between aggregates and is capable of withstanding the mechanical action of disaggregation caused by vehicle loads.

In order to improve the mechanical and rheological properties of bitumen, the addition of polymers has been described, thereby increasing the viscosity at high temperatures and reducing thermal sensitivity, the risk of permanent deformation, rutting and therefore increasing the elastic component of bitumen and reducing the risk of cracking caused by the fatigue or low temperatures. The addition of rubber powder in such bitumens as a substitute for polymers has also been described.

Once these mixtures have been prepared, they must be transported to the place where they are distributed with mechanical spreaders and later consolidated and compacted with suitable rollers. The temperature at which the bituminous mixture reaches its destination must be controlled for its correct distribution. If the temperature is too high, for example over 180°C, the binder can reach an excessive temperature with danger of oxidation or premature ageing. If the temperature is too low, around 135°C, the compaction can be very difficult. Therefore, the bitumen depends on the temperature of the mixture, which provides the energy of compaction to the whole material.

Due to the elevated temperatures of currently used road techniques, there is a significant concern, especially environmental, for $CO_2$ and volatile organic compound (VOC) emissions to the atmosphere caused at such temperatures, such as is demonstrated by the Kyoto protocol.

Current road techniques using the known hot mixtures present the following environmental problems:

- warming the atmosphere by burning fossil fuels;

- generation of polluting combustion gases, mainly $NO_2$, $SO_2$ and $CO_2$;
- emission of volatile organic compounds due to bitumen heating.

Therefore, from the environmental point of view, the technology of hot mixing goes against current trends that propose the elimination or at least the limitation of gas emissions to the atmosphere.

Thus, there is still no existing paving technique starting from a bituminous mixture that can work at temperatures lower than 100°C and which at the same time has improved mechanical and waterproofing properties compared to the known hot mixtures and which is also environmentally friendly.

DESCRIPTION OF THE INVENTION

The objective of the present invention is to overcome the drawbacks mentioned above, by developing a bituminous emulsion with a high content of bitumen and a high stability in storage as recited in claims 1 to 10.

A second aspect of the present invention is the use of said bituminous emulsion as a hydrocarbon binder in a composite material for road which allows the bitumen phase to be worked at a temperature below 110°C and the aqueous phase to be worked at a temperature from 30 to 60°C in contrast to the prior art temperatures from 120°C to 150°C for the bitumen phase and from 30°C to 60°C for the aqueous phase used for preparing the prior art bituminous emulsions.

It is still another aspect of the present invention to provide a process for obtaining a composite material containing the bituminous emulsion according to the first aspect ready for spreading on the road surface at a temperature of less than 100°C, and the composite material containing it.

Basic aspects in the manufacture of a bituminous emulsion are the temperatures of the two phases from the emulsion. The binding phase (bitumen and fluidisers) must be heated until reaching a minimum viscosity that allows its pumping and shearing in the mill. The aqueous phase must be heated to a temperature at which does not cause excessive thermal shock in contact with the bitumen phase on entering the mill. Also, the sum of the temperatures of the phases must not exceed 100°C to avoid boiling of the water. The presence of water vapour in the mill causes cavitations and results in partial breakage of the emulsion.

According to P. Becher in *"Emulsion Theory and Practice (1061)"* the deposition velocity of an emulsion, named Stokes velocity, is the value used for evaluating the stability of an emulsion by the following formula:

$$V = \frac{2g. \, r^2 (\delta \text{ globules} - \delta \text{ continuous phase})}{9 \, \eta}$$

wherein:

V= final velocity; cm/s
r = particle radius; cm
$\delta$ globules - $\delta$ continuous phase = density disperse phase and dispersant medium
g= acceleration of gravity; 980 cm / $s^2$
$\eta$= dispersant medium viscosity; ( g/cm/s )

When $\delta$ globules > $\delta$ continuous phase $\rightarrow$ V > 0 DEPOSITION (the disperse phase is concentrated in the bottom part).

Therefore, in order to reduce the Stokes velocity it would be advantageous to reduce the average particle size, to increase the content of bitumen or to increase the emulsion viscosity, among the most important properties for reducing the Stokes velocity.

The authors of the present invention have been found that a bituminous emulsion, optionally modified with rubber powder from tyres, which has been obtained in a system of stirring by dispersion in a suitable reactor allows working the bitumen phase in a laminar way, with low stirring, and with a high viscosity bitumen, above 4000 mPa.s (cP.s), at temperatures below 95°C, which results in bituminous emulsions with average particle sizes of approximately $2\mu m$, preferably less than $6\mu m$, more preferably less than $4\mu m$, and with a very low polydispersivity (Span) (1.396), preferably less than 3, more preferably less than 2, still more preferably less than 1.5.

Surprisingly, the bituminous emulsion according to the present invention, prepared by stirring in a dispersion reactor, has a lower average particle size, and a higher content of bitumen and therefore a high viscosity bitumen emulsion with a high stability in storage.

According to the first aspect of the invention, it is provided a bituminous emulsion comprising a bituminous phase and an aqueous phase as recited in claim 1.

Surprisingly, using a system by stirring in a dispersion reactor a bituminous emulsion with a bitumen content as high as 90%, preferably 76-90%, by weight of the total weight of the emulsion is achieved.

In accordance with a preferred embodiment of the invention, the quantity of rubber powder from tyres is preferably from 1% to 15%, more preferably from 2% to 10%, and still more preferably form 2% to 4% by weight of the total weight of the bitumen phase. Advantageously, the bitumen emulsion according to the first aspect of the invention contains rubber powder from tyres as bitumen, thus, contributing the bituminous emulsion to reuse of old tyres.

In a preferred embodiment, a rubber powder stabilising agent is added such as, for example, polyphosphoric acid, in a quantity of between 0.1% and 1%, preferably between 0.1% and 0.35%, more preferably between 0.15% and 0.25% by weight of the total weight of the bitumen phase.

In a preferred embodiment, a cationic asphaltic emulsifier is added in quantity of between 5% and 15%, preferably between 7% and 10% by weight, a quantity of water of between 75% and 95%, preferably between 80% and 90% by weight of the total weight of the soapy phase, and a quantity of emulsifier activating agent, being preferably an inorganic acid such as, for example, hydrochloric acid, from 2% to 9%, preferably from 4% to 7% by weight of the total weight of the soapy phase. It is important to highlight that the cationic asphaltic emulsifier is present in the final bituminous emulsion from 0.2 to 2% by weight.

In the present invention, the term "tyre rubber powder stabilising agent" is understood to mean any compound capable of retaining rubber in the bitumen matrix for a specific time through van der Waals type chemical bonds and hydrogen bonds.

In the present invention, the term "cationic asphaltic emulsifier" or "cationic surfactant" are understood to mean any organic compound of relatively high molecular weight where the linear or cyclic hydrocarbon part is soluble in asphalt. A cationic surfactant is characterised by having a net positive electric charge in its hydrophilic part. Substances that at high pH do not have net charge but a lower pH are cationic are also included in this group, such as the case of alkyl amines.

The process described above for the preparation of the bituminous emulsion, optionally modified with tyre rubber powder, is also called the "stirring for dispersion" process which allows to obtain an emulsion, optionally modified with rubber powder, with a final bitumen content as high as 90% by weight of the total weight of the emulsion.

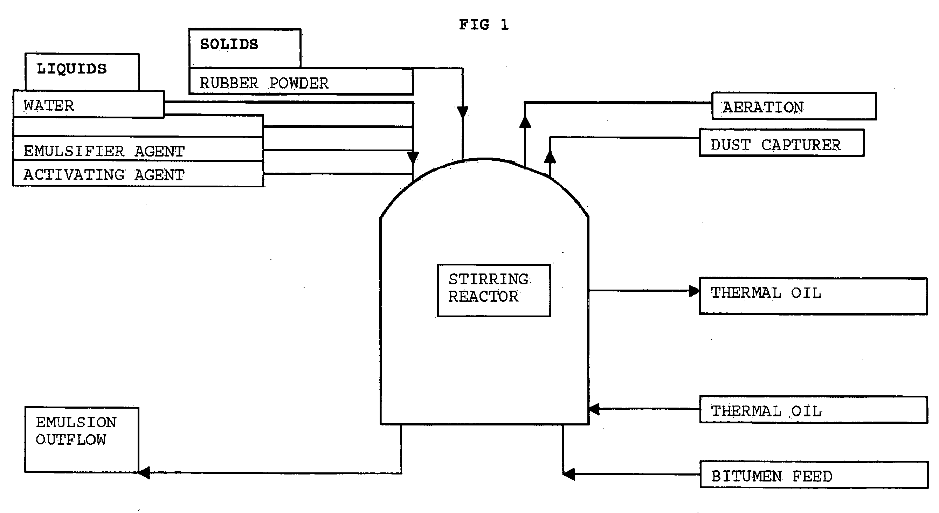

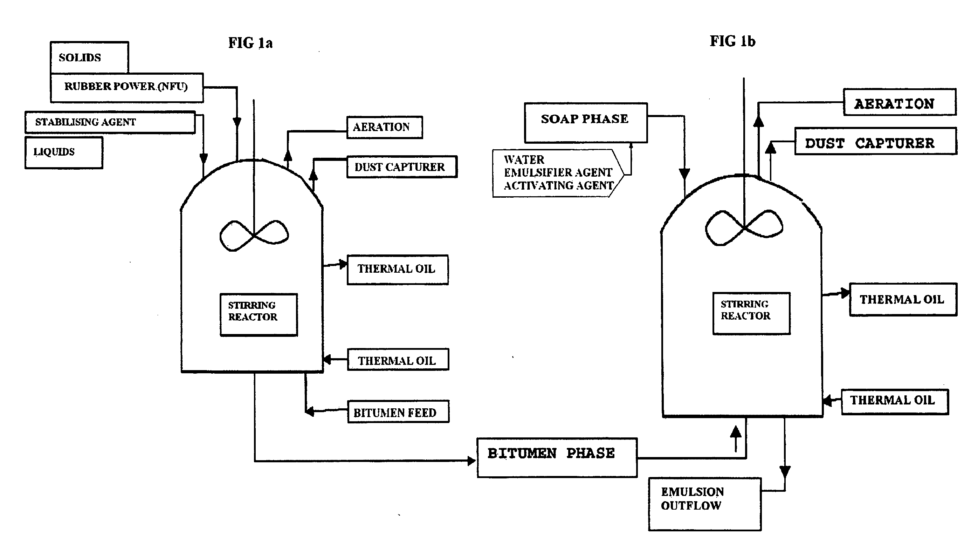

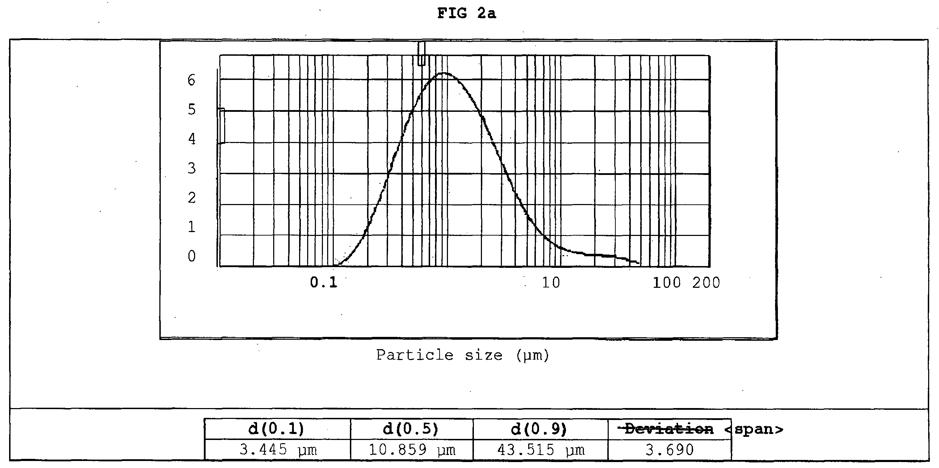

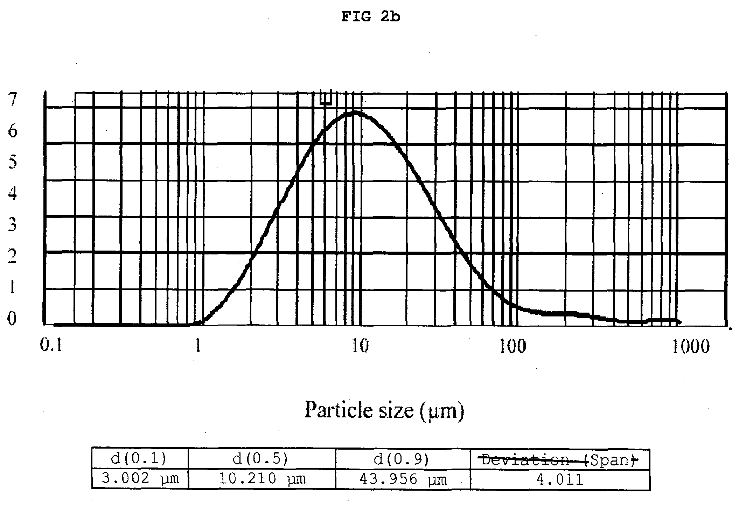

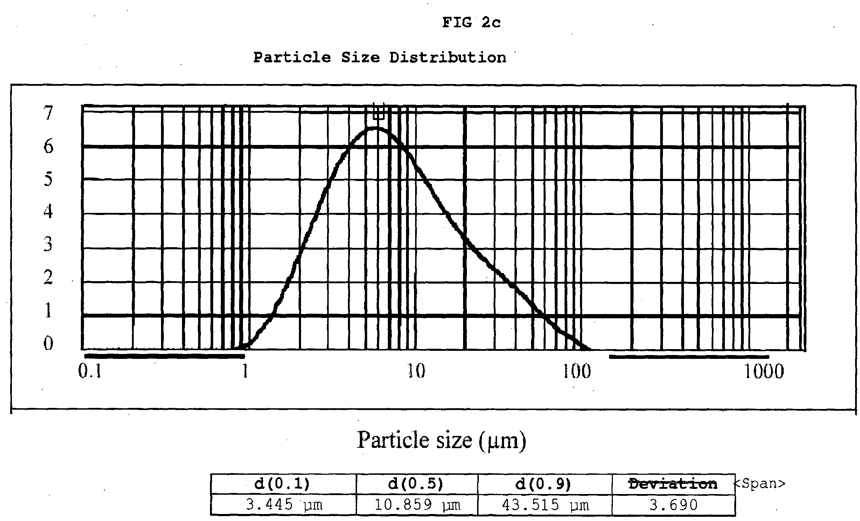

Advantageously, the particle size of the bituminous emulsion, optionally modified with rubber powder, obtained by stirring in the dispersion process described above does not depend on the radius between the rotor and the stator as in emulsions manufactured with mills. See below in Figure 1 (1a and 1b) about the stirring for dispersion process for obtaining the bituminous emulsion, optionally modified with rubber powder, of the invention as well as Figures 2 (2a and 2b) and 3 (3a and 3b) regarding the particle sizes of a conventional emulsion compared with the bituminous emulsion modified with rubber powder obtained as described above.

Surprisingly, the authors of the present invention have been found that the use of a bituminous emulsion, optionally modified with rubber powder, prepared as described above as a hydrocarbon binder in a composite material for road allows to obtain a composite material also called herein "half warm mixture" that has many advantages compared to the hot mixtures from the state of the art.

Thus, another object of the present invention is a composite material for road that comprises aggregates, mineral powder and the bituminous emulsion of the invention as a hydrocarbon binder.

The process for obtaining said composite material for road comprises the mixture of the aggregates, mineral powder and the bituminous emulsion with rubber powder as described above at a mixing temperature from 90 to 110°C compared to the conventional prior art temperatures from 170 to 180°C.

Further, with the composite material or half warm mixture according to the invention, the temperature at which the aggregates has to be heated at a reduced temperature of between 105-110°C, then mixed with the bituminous emulsion at a temperature of between 75-95°C, obtaining thereby a composite material or half warm mixture ready for paving at a temperature of below 100°C.

In particular, the process for obtaining a composite material for road comprises:

i) heating a bituminous emulsion according to the first aspect of the present invention at a temperature below 95°C;
ii) pre-heating the aggregates to a temperature below 110°C; and
iii) mixing the pre-heated aggregates with the bituminous emulsion, followed by adding mineral powder,

wherein said composite material obtained is ready for spreading on the road surface at a temperature of less than 100°C. Preferably, the bituminous emulsion is heated at a temperature below 90°C.

Advantageously, the manufacture of the composite material or half warm mixture for road of the present invention requires less fuel consumption for heating the aggregates and, therefore, the consumption of fuel and $CO_2$ and $SO_2$ emissions to the atmosphere derived from this heating are substantially reduced.

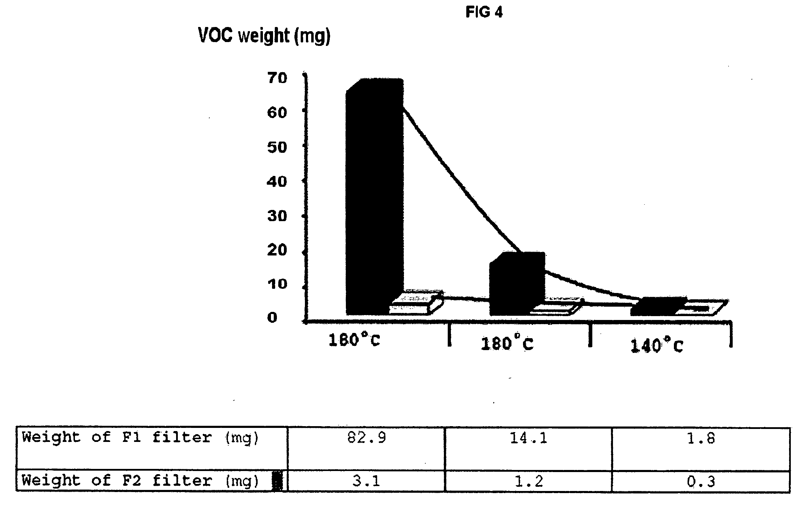

In addition, the manufacture of the composite material or half warm mixture for road of the invention also allows a substantial reduction of emissions of volatile organic compounds (VOCs) from bitumen, exponentially with the reduction in temperature of the bitumen. See figure 4.

Advantageously, the problems of oxidation or premature weathering of the bitumen with the composite material or half warm mixture for road according to the invention are reduced due to the fact that said composite material or half warm mixture can be spread at temperatures as low as 90-100°C compared to the common prior art hot mixture temperatures of 150-180°C, without this being accompanied by an increase in compaction of the mixture. Also advantageously, a decrease in the working temperatures ensures the worker safety for obtaining the composite material.

In Table 1 below, a comparison of the commonly used temperatures in the state of the art for manufacturing a bituminous mixture for road compared to the temperatures used for the manufacture of the composite material or the half warm bituminous mixture of the present invention is included.

**Table 1**

| MATERIALS | CONVENTIONAL TEMPERATURES (°C) | MATERIALS | INVENTION TEMPERATURES (°C) |
|---|---|---|---|
| AGGREGATES | 155-175°C | AGGREGATES | 105-110°C |
| BINDER | 150-170°C | EMULSION | <95°C |
| PAVING STAGE | 140-150°C | PAVING STAGE | <100°C |

Table 2 below shows the fuel consumption of a plant for manufacturing standard bituminous mixture as a function of the temperature of the aggregates:

**Table 2**

| Temperature of aggregates (°C) | Fuel consumption (kg fuel/tonne aggregate) |
|---|---|
| 140 | 6.6 |
| 160 | 7.3 |
| 180 | 7.9 |

The combustion of fuel is governed by the following reaction:

$$Cn\text{-}H2n\text{+}2 + x\,O_2 \rightarrow nCO_2 + (2n+1)H_2O$$

In terms of weight, a fuel with an average chain length of 25 carbon atoms generates after burning about 3.5 times its weight of $CO_2$.

Thus, the great saving in fuel comes from working at temperatures below 100 °C, which does not allow the heat capacity of the fuel to vaporise water in the plant. This saving can be estimated at about 2 litres of fuel per tone of aggregate, which when linked to the savings of working at lower temperature makes the total reduction of fuel to be 4 litres per tone of aggregate.

Also, advantageously, with the composite material or half warm mixture for road of the invention, the reuse of old tyres as a bitumen is carried out, thus contributing to their removal or reuse when they are used in the preparation of the bituminous emulsion according to the invention and therefore added in the composite material or half warm mixture as a hydrocarbon binder.

Therefore, with the composite material or half warm mixture for road of the invention, a material that is good for the environment is provided, both from the point of view of the starting materials used and from the reduction of fuel used, reducing emissions of toxic compounds to the atmosphere, reducing the oxidation of the binder and therefore a contribution to extending useful life, in addition to providing road with excellent mechanical and stability properties.

DESCRIPTION OF THE FIGURES

Figure 1 is a schematic representation of a plant with a reactor and various feed lines for the starting materials for obtaining a bituminous emulsion modified with rubber powder by stirring in the dispersion process. See also Example 1 of the embodiment. Figure 1a shows the elements (feed and exit lines) used for preparing the bituminous phase of the bituminous emulsion. Figure 1b shows the elements (feed and exit lines) for preparing the bituminous emulsion which includes the bituminous phase and the soapy phase.

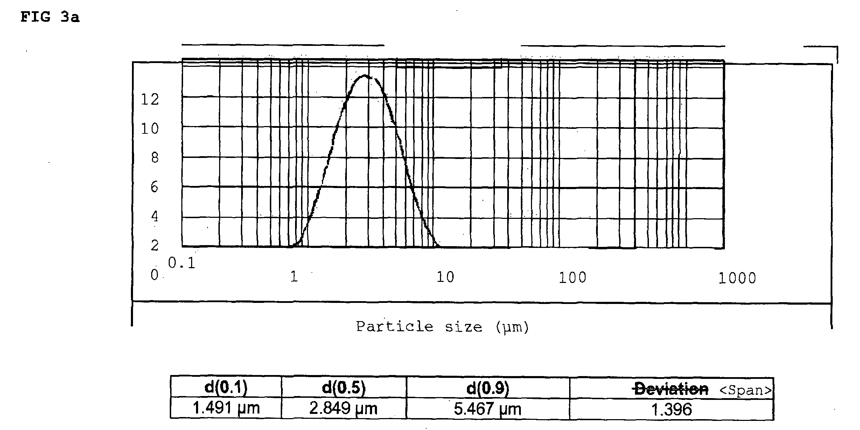

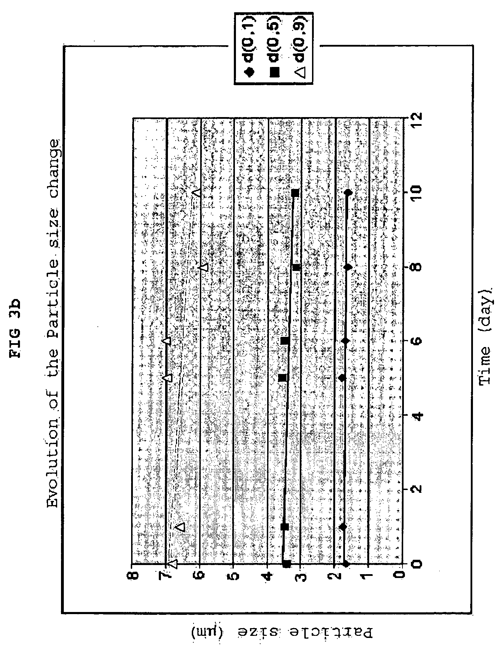

Figures 2 (2a, 2b and 2c) and 3 (3a and 3b) show the particle size ($\mu$m) distribution of a conventional emulsion (Fig 2) compared to a bituminous emulsion according to the invention, optionally modified with rubber powder, (Fig 3), which confers high storage stability to the emulsion of the invention. At the same bitumen concentration in both emulsions, the bituminous emulsion according to the present invention has a higher viscosity.

Figure 4 shows a bar diagram where the volatile organic compounds, VOCs, (weight collected in F1 and F2 filters in mg) are represented at various bitumen temperatures. Figure 4 also shows how the VOC emissions have an exponential relationship to the bitumen temperature.

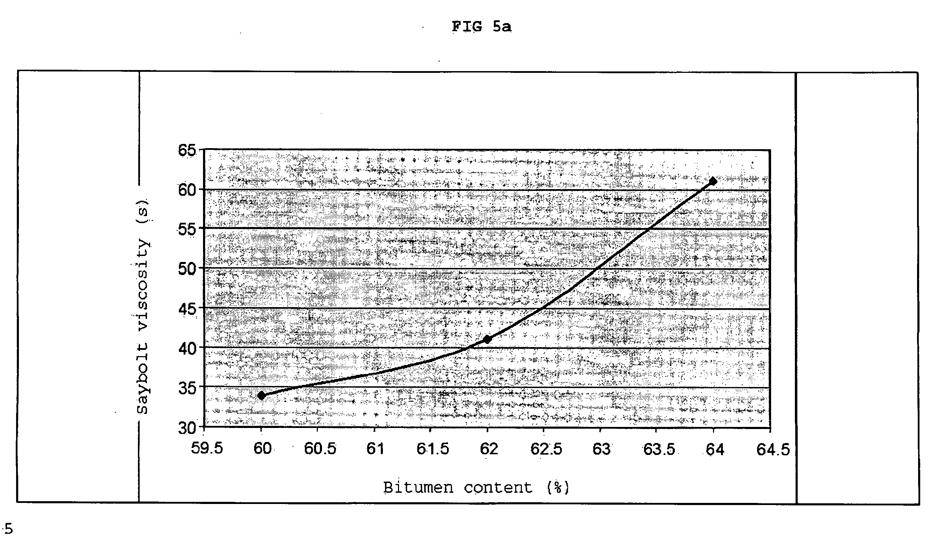

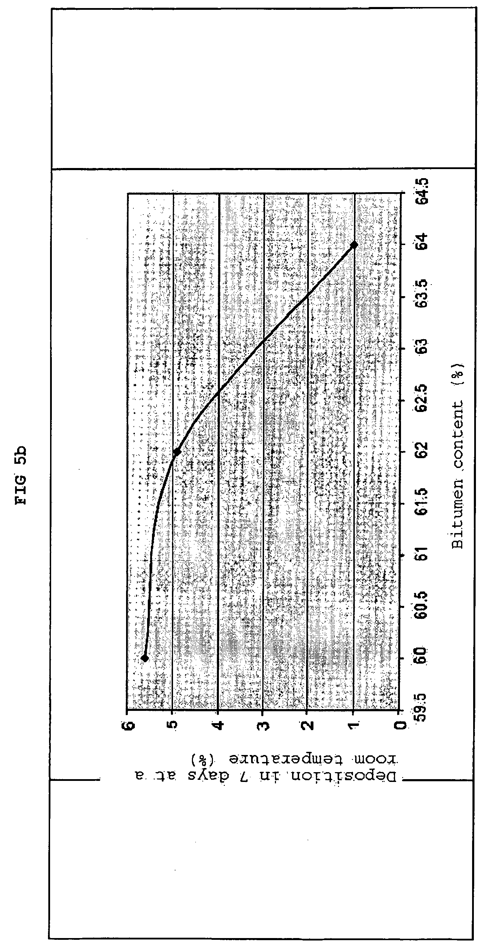

Figure 5a and 5b shows the evolution of Saybolt viscosity as function of the bitumen content, and the deposition (stability) as a function of the bitumen content, respectively.

EXPERIMENTAL ASSAYS

In order to know the stability of the bituminous emulsion according to the present invention the following assays were carried out:

- The physico-chemical features of 3 bituminous emulsions from the prior art were studied. The assays were carried out in relation to sieving, viscosity, and deposition for 7 days. Also a particle size analysis was performed for all bituminous emulsions including prior art emulsions and invention emulsions.
- Particle size vs time was also analyzed.
- Storage stability was also analyzed at different days and temperatures in bituminous emulsions with different content of bitumen.

CHARACTERIZATION ASSAYS OF PHYSICO-CHEMICAL PROPERTIES

In a first step, the Physico-Chemical properties of bituminous emulsions of prior art were analyzed, hereinafter named as EMULSION 1, 2 and 3, respectively, together with bituminous emulsions according to the present invention at different content of bitumen.

The particle size properties, sieving, viscosity and deposition were studied in three different storing conditions, and with a bitumen content of 60%, 62% and 64%:

- 7 days of deposition at 25 °C
- 7 days of deposition at 50 °C
- 14 days of deposition at 25 °C

The obtained results are shown in Table 3 below. As can be seen from said Table 3, the bituminous emulsions from the invention are stable for a long period of time and at high temperature. Considering that the bituminous emulsion from the invention are stored at high temperatures and not at a room temperature, it can be seen that the obtained results are still more representative of the high stability of the bituminous emulsion of the invention.

In order to characterize the particle size of that emulsions, a diffraction laser equipment, MASTERSIZER 2000, was used. The high and average distribution, and the width of the curve; distribution width (Span) provides information about the homogeneity of the bitumen which can be found in the figures included at the end of the specification wherein the particle size is shown as a function of the total volume of the sample. The results are shown in figure 2a (emulsion 1), figure 2b (emulsion 2), figure 2c (emulsion 3) and figure 3a (emulsion according to the invention).

At the same bitumen content, the grading/particle size curve of the bituminous emulsion according to the invention shows a very small size distribution compared to the size distribution of a bituminous emulsion from the prior art. With the bituminous emulsion according to the invention a decrease of at least 50% of the distribution width (Span) is done, i.e. the bituminous emulsion according to the invention has a very low (Span) polydispersity. Therefore, the bituminous emulsion according to the invention has a high viscosity with the same bitumen content compared with other bituminous emulsions from the prior art. Further, the bituminous emulsion according to the invention has a very small average particle size and also a small distribution which allow to obtain bituminous emulsions of high stability in storage.

TABLE **3**

| EMULSION | DAY | TEMP (°C) | FORMULATION | | | EMULSION ASSAYS | | | | | |
|---|---|---|---|---|---|---|---|---|---|---|---|
| | | | BITUM EN | H$_2$O | pH | PARTICLE SIZE | | | SIEVING | VISCO-SITY | SED. |
| | | | % | % | | d (0.1) | d (0.5) | d (0.9) | % | Tfluencia (s) | % |
| INVENTION | 7 | 25 | 60 | 40 | < 2.5 | 2.544 | 5.931 | 15.005 | < 0.05 | 27 | 7 |
| INVENTION | 7 | 25 | 60 | 40 | < 2.5 | 1.201 | 2.244 | 4.402 | < 0.05 | 34 | 8 |
| | | | | | | | | | | | |
| INVENTION | 7 | 25 | 62 | 38 | < 2.5 | 1.342 | 2.774 | 6.008 | < 0.05 | 39 | 4 |
| INVENTION | 7 | 25 | 64 | 36 | < 2.5 | 1.786 | 3.834 | 9.468 | <0.0.5 | 58 | 2 |
| INVENTION | 7 | 25 | 64 | 36 | < 2.5 | 1.456 | 2.89 | 6.416 | < 0.05 | 64 | 1 |
| | | | | | | | | | | | |
| | | | | | | | | | | | |
| | | | | | | | | | | | |
| | | | | | | | | | | | |
| INVENTION | 7 | 50 | 62 | 38 | < 2.5 | 1.342 | 2.772 | 6.008 | < 0.05 | 39 | 12 |
| INVENTION | 7 | 50 | 64 | 36 | < 2.5 | 1.456 | 2.89 | 6.416 | < 0.05 | 64 | 3 |
| INVENTION | 14 | 25 | 60 | 40 | <2.5 | 1.201 | 2.244 | 4.402 | < 0.05 | 34 | 10 |
| | | | | | | | | | | | |
| INVENTION | 14 | 25 | 64 | 36 | < 2.5 | 4.456 | 2.89 | 6.416 | < 0.05 | 64 | 2 |

STABILITY *versus* PARTICLE SIZE ASSAYS

The stability of the bituminous emulsions from the invention has been studied *versus* time taking into account the average particle size and the higher particle size after 10 days in storage at a room temperature. It is known that an emulsion is flocculated after a period of time. The particles start to join destabilizing the emulsion. The more homogeneous is the emulsion less flocculation and less deposition is produced. It is well understood that when two drops are fused a coalescence effect is produced and an increase in the average particle size and the high particle size will occur. The data obtained after 10 days are included in Table 4 below.

**Table 4**

| Day | d(0.1)$\mu$m | d(0.5) $\mu$m | d(0.9) $\mu$m |
|---|---|---|---|
| 0 | 1.651 | 3.406 | 6.829 |
| 1 | 1.749 | 3.449 | 6.604 |
| 5 | 1.779 | 3.557 | 6.959 |
| 6 | 1.685 | 3.486 | 6.995 |
| 8 | 1.621 | 3.130 | 5.927 |
| 10 | 1.623 | 3.184 | 6.137 |

In figure 3b, the particle size variation *versus* time is shown. The bituminous emulsion from the invention was stable for 10 days at a room temperature. The average size and higher size values were not changed during this period of time and they were almost the same after 10 days in storage.

ESTABILITY *versus* TEMPERATURE ASSAY

It is known by a person with general knowledge in the field that the temperature increases the deposition process of an emulsion due to the decrease of the viscosity. In addition, the flocculation and the coalescence also decrease due to the higher thermal stirring, and also decrease the HLB (hydrophilic lypophilic balance) of emulsifiers.
Different concentrations of emulsions were prepared for analyzing the stability or deposition effect of the bituminous emulsion of the invention. The assayed concentrations were 60, 62 and 64 % of bitumen at the temperatures of 25°C and 50°C, for 7 and 14 days.

| Bitumen content (%) | Particle size ($\mu$m) | | | Sieving (%) | Viscosity Saybolt (s) | Deposition (%) | | |
|---|---|---|---|---|---|---|---|---|
| | d(0.1) | d(0.5) | d(0.9) | | | N° day | T(°C) | Depos. |
| 60 | $1.757^{\pm0.701}$ | $3.993^{\pm.851}$ | $11.17^{\pm5.878}$ | <0.05 | 34 | 7 | 25 | 6 |
| | | | | | | 7 | 50 | 18 |
| | | | | | | 14 | 25 | 9 |
| 62 | $1.62^{\pm0.333}$ | $3.733^{\pm0.930}$ | $10.429^{\pm3.070}$ | <0.05 | 41 | 7 | 25 | 5 |
| | | | | | | 7 | 50 | 16 |
| | | | | | | 14 | 25 | 6 |
| 64 | $1.621^{\pm0.233}$ | $3.362^{\pm0.667}$ | $7.942^{\pm2.159}$ | <0.05 | 61 | 7 | 25 | 1 |
| | | | | | | 7 | 50 | 11 |
| | | | | | | 14 | 25 | 2 |

The obtained viscosity data for the invention emulsions were higher than the conventional emulsions with the same content of bitumen due to a low average particle size as low as 50% compared to the conventional emulsions. The obtained results are shown in Figures 5a and 5b. Therefore, the viscosity level increases as the bitumen content increases. The emulsion deposition with a temperature of 50°C was very small.

DESCRIPTION OF PREFERRED EMBODIMENTS

For a better understanding of the description above; some examples are given below that, schematically and only as non-limiting examples, represent a practical case of embodiment.

### Example 1. Preparation of a bituminous emulsion modified with rubber powder obtained from tyres

Prepare the bitumen phase with rubber powder from old tyres. To do this. introduce 4.840 kg bitumen type 80/100 into one of the reactors and heat to 175-180 °C. Once this temperature is reached, add 3% of rubber powder that is 150 kg, through the dosing chute. Stir at between 800-950 rpm for one and a half hours. After this time, add 0.2% PPA (polyphosphoric acid) and leave stirring for 30 more minutes. After this time, unload into a tank for cooling to 105-110 °C.

Repeat the operation until there is sufficient bitumen with rubber powder to emulsify.

To perform emulsification, it is necessary to first prepare the soapy phase in one of the tanks. This contains:

- 330 kg of cationic asphaltic emulsifier (ASFIER 100)
- 200 kg of HCl
- 2.970 kg of $H_2O$

The water is added at a temperature of 30-60 °C, while the surfactant is at 30-40 °C. Leave stirring until fully dissolved.

In a second reactor, load 3.000 kg of bitumen with rubber that was prepared earlier. Allow to cool to 100-105 °C. Once this temperature has been reached, add 333 kg of the previously prepared soapy solution and stir at 950 rpm for 5 minutes. Check that it has emulsified and add 1.745 kg $H_2O$. Leave stirring at 400-500 rpm for 10-15 minutes and unload the emulsion into the corresponding tank.

### Example 2. Manufacture of a composite material (half warm mixture) containing the bituminous emulsion modified with rubber powder obtained in Ex. 1

For the manufacture of the half warm mixture, a hot mixing plant model Intrame 160 was used.

Between 5-10% of the bituminous emulsion modified with rubber powder as prepared in Example 1 was heated to 80°C and fed into 95% of aggregate previously heated to between 100-110 °C.

The feeding of the aggregate was performed through a by-pass, so that it was not necessary to perform hot fractionation. Then, the mineral powder was added to the mixture.

Then, the mixing of aggregate. emulsion and mineral powder was allowed to proceed for 20 seconds, after which the degree of coverage of the aggregate was 95%. The half warm mixture obtained was immediately loaded into trucks for transport to the place of application.

### Example 3. Spreading of the composite material (half warm mixture) from Ex. 2 for road surfaces

The half warm mixture obtained in Example 2 was transported to the place of application in suitable trucks over a time of approximately 1 hour.

Then. the spreading of the half warm mixture was performed using mechanical spreaders. During the spreading, the half warm mixture was at approximately 90-100 °C. The degree of workability of the mixture was excellent at this temperature, as if it were a hot mixture.

The spread half warm mixture was consolidated with suitable rollers and. finally. a pneumatic roller was used to seal the surface layer.

After the compaction was completed and the density appropriate, traffic was allowed into the worked zone when the layer had reached ambient temperature.

Despite the description above and the specific embodiments of the present invention illustrated, it is evident that an expert in the field could introduce variants and modifications or substitute details for other technically equivalent details, without departing from the scope defined by the claims attached. Thus, for example, the use of any type of aggregate, either of natural, artificial or recycled origin remains within the scope of the present invention.

**Claims**

**1.** Process for preparing a bituminous emulsion comprising a bituminous phase and an aqueous phase, **characterized**

**in that** said bitumen phase, previously prepared, and the soapy phase, previously prepared, are stirred into a system of stirring by dispersion in a suitable reactor which allows working the bitumen phase in a laminar way, with low stirring, wherein the stirring by dispersion is carried out by the following steps:

i) preparation of the bitumen phase by heating a quantity of bitumen of viscosity, of above 4000 mPa.s (cP.s.), measured at temperatures below 95°C, to a temperature from 170°C to 185°C;
ii) addition to the pre-heated bitumen phase of rubber powder from tyres from 1% to 15% by weight of the total weight of the bitumen phase;
iii) stirring into the dispersion reactor the mixture of both components and, adding and stirring an agent for stabilising the tyre rubber powder, and cooling the mixture to a temperature from 100°C to 110°C;
iv) preparation of a soapy phase by mixing a quantity of cationic asphaltic emulsifier at a temperature from 25°C to 45°C, a quantity of water at a temperature from 25°C to 65°C and a quantity of emulsifier activating agent; and
v) mixing the bitumen phase from step iii) with the soapy phase from step iv) into the reactor and adding water until the ratio of the bitumen phase/water phase in the bituminous emulsion is between 60/40 and 90/10, followed by stirring to obtain the bituminous emulsion, being the bitumen content from 60 to 90% by weight and the cationic asphaltic emulsifier from 0.2 to 2% by weight to the total weight of the bituminous emulsion,

to obtain bituminous emulsions with average particle sizes of less than 6 $\mu$m and with a polydispersivity of less than 3, measured in a diffraction laser equipment MASTERSIZER 2000.

2. Process for preparing a bituminous emulsion according to claim 1, wherein the rubber powder from tyres is present from 2% to 10% by weight to the total weight of the bitumen phase.

3. Process for preparing a bituminous emulsion according to claim 1, wherein said bituminous emulsion has an average particle size of less than 4$\mu$m.

4. Process for preparing a bituminous emulsion according to claim 3, wherein said bituminous emulsion has an average particle size of less than 2$\mu$m.

5. Process for preparing a bituminous emulsion according to claim 1, wherein said bituminous emulsion has a polydispersivity less than 2.

6. Process for preparing a bituminous emulsion according to claim 5, wherein said bituminous emulsion has a polydispersivity less than 1.5.

7. Process for preparing a bituminous emulsion according to claim 1, wherein said bituminous emulsion has a bitumen content from 76 to 90% by weight.

8. Process for preparing a bituminous emulsion according to claim 1, wherein the quantity of rubber powder stabilising agent is from 0.1% to 1% by weight of the total weight of the bitumen phase.

9. Process for preparing a bituminous emulsion according to claim 1, wherein in the soapy phase the quantity of cationic asphaltic emulsifier is from 5% to 15% by weight, the quantity of water is from 75% to 95% by weight and the quantity of emulsifier activating agent is from 2% to 9% by weight.

10. Process for preparing a bituminous emulsion according to claim 9, wherein the quantity of emulsifier activating agent is from 4% to 7% by weight.

**Patentansprüche**

1. Verfahren zum Herstellen einer bituminösen Emulsion, die eine bituminöse Phase und eine wässrige Phase aufweist, **dadurch gekennzeichnet, dass** die zuvor hergestellte Bitumenphase und die zuvor hergestellte seifige Phase in einem geeigneten Reaktor in ein System eines Rührens mittels Dispersion hinein gerührt werden, was eine laminare Bearbeitung der Bitumenphase bei geringem Rühren ermöglicht, während das Rühren mittels Dispersion anhand der folgenden Schritte ausgeführt wird:

i) Herstellung der Bitumenphase durch Erhitzen einer Menge an Bitumen einer Viskosität von über 4000 mPa.s (cP.s.), die bei Temperaturen unter 95 °C gemessen wird, auf eine Temperatur von 170 °C bis 185 °C;

ii) Hinzufügung, zu der vorerhitzten Bitumenphase, eines von Reifen stammenden Kautschukpulvers von 1 bis 15 Gew.-% des Gesamtgewichts der Bitumenphase;

iii) Einrühren, in den Dispersionsreaktor, des Gemischs beider Komponenten und Hinzufügen und Rühren eines Mittels zum Stabilisieren des Reifenkautschukpulvers, und Abkühlen des Gemischs auf eine Temperatur von 100°C bis 110°C;

iv) Herstellung einer seifigen Phase durch Mischen einer Menge eines kationischen asphaltischen Emulgators bei einer Temperatur von 25 °C bis 45 °C, einer Menge an Wasser bei einer Temperatur von 25 °C bis 65 °C und einer Menge eines Emulgatoraktivierungsmittels; und

v) Mischen der Bitumenphase aus Schritt iii) mit der seifigen Phase aus Schritt iv) in den Reaktor und Hinzufügen von Wasser, bis das Verhältnis der Bitumenphase/Wasserphase in der bituminösen Emulsion zwischen 60/40 und 90/10 liegt, gefolgt von Rühren, um die bituminöse Emulsion zu erhalten, wobei der Bitumengehalt 60 bis 90 Gew.-% und der kationische asphaltische Emulgator 0,2 bis 2 Gew.-% des Gesamtgewichts der bituminösen Emulsion beträgt,

um bituminöse Emulsionen mit durchschnittlichen Partikelgrößen von weniger als 6 μm und mit einer Polydispersität von weniger als 3, gemessen in einer Beugungslaserapparatur MASTERSIZER 2000, zu erhalten.

2. Verfahren zum Herstellen einer bituminösen Emulsion gemäß Anspruch 1, bei dem das von Reifen stammende Kautschukpulver zu zwischen 2 und 10 Gew.-% des Gesamtgewichts der Bitumenphase vorliegt.

3. Verfahren zum Herstellen einer bituminösen Emulsion gemäß Anspruch 1, bei dem die bituminöse Emulsion eine durchschnittliche Partikelgröße von weniger als 4 μm aufweist.

4. Verfahren zum Herstellen einer bituminösen Emulsion gemäß Anspruch 3, bei dem die bituminöse Emulsion eine durchschnittliche Partikelgröße von weniger als 2 μm aufweist.

5. Verfahren zum Herstellen einer bituminösen Emulsion gemäß Anspruch 1, bei dem die bituminöse Emulsion eine Polydispersivität von weniger als 2 aufweist.

6. Verfahren zum Herstellen einer bituminösen Emulsion gemäß Anspruch 5, bei dem die bituminöse Emulsion eine Polydispersivität von weniger als 1,5 aufweist.

7. Verfahren zum Herstellen einer bituminösen Emulsion gemäß Anspruch 1, bei dem die bituminöse Emulsion einen Bitumengehalt von 76 bis 90 Gew.-% aufweist.

8. Verfahren zum Herstellen einer bituminösen Emulsion gemäß Anspruch 1, bei dem die Menge an Kautschukpulverstabilisierungsmittel zwischen 0,1 und 1 Gew.-% des Gesamtgewichts der Bitumenphase beträgt.

9. Verfahren zum Herstellen einer bituminösen Emulsion gemäß Anspruch 1, bei dem in der seifigen Phase die Menge an kationischem asphaltischen Emulgator zwischen 5 und 15 Gew.-% beträgt, die Menge an Wasser zwischen 75 und 95 Gew.-% beträgt und die Menge an Emulgatoraktivierungsmittel zwischen 2 und 9 Gew.-% beträgt.

10. Verfahren zum Herstellen einer bituminösen Emulsion gemäß Anspruch 9, bei dem die Menge an Emulgatoraktivierungsmittel zwischen 4 und 7 Gew.-% beträgt.

**Revendications**

1. Procédé de préparation d'une émulsion bitumineuse comprenant une phase de bitume et une phase aqueuse, **caractérisé en ce que** ladite phase de bitume, préparée au préalable, et la phase saponifiée, préparée au préalable, sont agitées dans un système d'agitation par dispersion dans un réacteur adéquat permettant de travailler la phase de bitume de façon laminaire, avec peu d'agitation, dans lequel l'agitation par dispersion est effectuée selon les étapes suivantes :

i) préparation de la phase de bitume par chauffage d'une quantité de bitume de viscosité supérieure à 4000 mPa.s (cP.s.), mesurée à des températures inférieures à 95°C jusqu'à une température comprise entre 170°C et 185°C ;

ii) ajout à la phase de bitume préchauffée de poudre de caoutchouc de pneus de 1 à 15% en poids du poids total de la phase de bitume ;

iii) agitation dans le réacteur de dispersion du mélange des deux composants et, ajout et agitation d'un agent pour stabiliser la poudre de caoutchouc de pneus, et refroidissement du mélange à une température de 100°C à 110°C ;

iv) préparation d'une phase saponifiée par mélange d'une quantité d'un émulsifiant asphaltique cationique à une température de 25°C à 45°C, d'une quantité d'eau à une température de 25°C à 65°C et une d'une quantité d'agent activateur émulsifiant ; et

v) mélange de la phase de bitume selon l'étape iii) avec la phase saponifiée selon l'étape iv) dans le réacteur et ajout d'eau jusqu'à ce que le ratio phase de bitume/phase aqueuse dans l'émulsion bitumineuse soit compris entre 60/40 et 90/10, suivi par l'agitation pour obtenir l'émulsion bitumineuse, la teneur en bitume se situant entre 60 et 90% en poids et celle en émulsifiant asphaltique cationique entre 0,2 et 2% en poids du poids total de l'émulsion bitumineuse,

afin d'obtenir des émulsions bitumineuses avec des tailles de particules moyennes inférieures à 6 μm et une polydispersion inférieure à 3 mesurée dans un appareil laser à diffraction MASTERSIZER 2000.

2. Procédé de préparation d'une émulsion bitumineuse selon la revendication 1, dans lequel la poudre de caoutchouc de pneus est présente dans une proportion de 2% à 10% en poids du poids total de la phase de bitume.

3. Procédé de préparation d'une émulsion bitumineuse selon la revendication 1, dans lequel ladite émulsion bitumineuse a une taille moyenne de particule inférieure à 4 μm.

4. Procédé de préparation d'une émulsion bitumineuse selon la revendication 3, dans lequel ladite émulsion bitumineuse a une taille moyenne de particule inférieure à 2 μm.

5. Procédé de préparation d'une émulsion bitumineuse selon la revendication 1, dans lequel ladite émulsion bitumineuse a une polydispersion inférieure à 2.

6. Procédé de préparation d'une émulsion bitumineuse selon la revendication 5, dans lequel ladite émulsion bitumineuse a une polydispersion inférieure à 1,5.

7. Procédé de préparation d'une émulsion bitumineuse selon la revendication 1, dans lequel la teneur en bitume de ladite émulsion bitumineuse est comprise entre 76 et 90% en poids.

8. Procédé de préparation d'une émulsion bitumineuse selon la revendication 1, dans lequel la quantité d'agent stabilisant de poudre de caoutchouc est comprise entre 0,1% et 1% en poids du poids total de la phase de bitume.

9. Procédé de préparation d'une émulsion bitumineuse selon la revendication 1, dans lequel dans la phase saponifiée la quantité d'émulsifiant asphaltique cationique est comprise entre 5% et 15% en poids, la quantité d'eau est comprise entre 75% et 95% en poids et la quantité d'agent activateur émulsifiant est comprise entre 2% et 9% en poids.

10. Procédé de préparation d'une émulsion bitumineuse selon la revendication 9, dans lequel la quantité d'agent activateur émulsifiant est comprise entre 4% et 7% en poids.

FIG 1

LIQUIDS

WATER

EMULSIFIER AGENT

ACTIVATING AGENT

SOLIDS

RUBBER POWDER

AERATION

DUST CAPTURER

STIRRING REACTOR

THERMAL OIL

THERMAL OIL

BITUMEN FEED

EMULSION OUTFLOW

FIG 1b

AERATION
DUST CAPTURER
THERMAL OIL
THERMAL OIL
STIRRING REACTOR
EMULSION OUTFLOW
SOAP PHASE
WATER
EMULSIFIER AGENT
ACTIVATING AGENT
BITUMEN PHASE

FIG 1a

AERATION
DUST CAPTURER
THERMAL OIL
THERMAL OIL
BITUMEN FEED
STIRRING REACTOR
SOLIDS
RUBBER POWER (NFU)
STABILISING AGENT
LIQUIDS

## FIG 2a

Particle size (µm)

| d(0.1) | d(0.5) | d(0.9) | ~~Deviation~~ <span> |
|--------|--------|--------|----------------------|
| 3.445 µm | 10.859 µm | 43.515 µm | 3.690 |

FIG 2b

Particle size (μm)

| d(0.1) | d(0.5) | d(0.9) | ~~Deviation (Span)~~ |
|--------|--------|--------|---------------------|
| 3.002 μm | 10.210 μm | 43.956 μm | 4.011 |

EP 2 571 940 B1

FIG 2c

## Particle Size Distribution

Particle size (μm)

| d(0.1) | d(0.5) | d(0.9) | ~~Deviation~~ <Span> |
|--------|--------|--------|-----------|
| 3.445 μm | 10.859 μm | 43.515 μm | 3.690 |

EP 2 571 940 B1

FIG 3a

Particle size (µm)

| d(0.1) | d(0.5) | d(0.9) | Deviation <Span> |
|---|---|---|---|
| 1.491 µm | 2.849 µm | 5.467 µm | 1.396 |

EP 2 571 940 B1

FIG 3b

Evolution of the Particle size change

EP 2 571 940 B1

**FIG 4**

VOC weight (mg)

| Weight of F1 filter (mg) | 82.9 | 14.1 | 1.8 |
|---|---|---|---|
| Weight of F2 filter (mg) | 3.1 | 1.2 | 0.3 |

FIG 5a

FIG 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9906139 A

- WO 9423129 A1